# FASCICULE DE BREVET EUROPEEN

(11) **EP 1 079 984 B1**
(45) Date de publication et mention de la délivrance du brevet: **27.11.2002**
(21) Numéro de dépôt: 99917008.7
(22) Date de dépôt: 07.05.1999
(51) Int. Cl.: B60K 15/035, F16K 24/04

(54) **DISPOSITIF DE MISE A L'AIR LIBRE D'UN RESERVOIR DE CARBURANT DE VEHICULE AUTOMOBILE**
ENTLÜFTUNGSVORRICHTUNG EINES KRAFTSTOFFTANKS EINES KRAFTFAHRZEUGES
DEVICE FOR VENTILATING A MOTOR VEHICLE FUEL TANK

(30) Priorité: 28.05.1998 FR 9806727
(43) Date de publication de la demande: 07.03.2001
(73) Titulaire: Compagnie de Matériel et d'Equipements Techniques C.O.M.E.T., 60300 Senlis (FR)
(72) Inventeur: ROMANEK, Christian, F-60430 Noailles (FR)
(74) Mandataire: Rinuy, Santarelli
(86) Numéro de dépôt international: FR9901089
(87) Numéro de publication internationale: WO99061275

(56) Documents cités:
- US-A- 5 522 417
- US-A- 5 694 968

## Description

L'invention concerne un dispositif de mise à l'air libre d'un réservoir de carburant de véhicule automobile.

L'invention se rapporte plus particulièrement à un dispositif de mise à l'air libre pour un réservoir de carburant de véhicule automobile, du type comportant une chambre qui communique d'une part avec le réservoir et d'autre part, au travers d'un orifice supérieur de sortie, avec une canalisation d'évacuation, et du type dans lequel le dispositif comporte, à l'intérieur de la chambre, un flotteur qui commande un pointeau pour obturer l'orifice supérieur de sortie lorsque le niveau de carburant dépasse un seuil prédéterminé dans la chambre.

La mise à l'air libre du réservoir de carburant d'un véhicule automobile a pour but d'éviter toute surpression ou dépression dans le réservoir qui, sinon, risquerait de se déformer de manière importante.

Ainsi, au fur et à mesure que le réservoir se vide de son carburant, il est nécessaire d'admettre de l'air à l'intérieur du réservoir pour éviter que la pression n'y baisse trop. Au contraire, lorsque le réservoir est exposé à une forte élévation de température, par exemple lorsque le véhicule est garé au soleil, la pression des vapeurs contenues dans le réservoir peut augmenter fortement et il est alors nécessaire d'évacuer une partie de ces vapeurs vers l'extérieur.

Or, il est par ailleurs nécessaire de prévoir des moyens qui permettent d'empêcher que du carburant ne puisse s'échapper au travers du dispositif de mise à l'air libre lorsque le niveau de carburant à proximité du dispositif augmente de manière importante suite par exemple à une accélération subie par le véhicule.

A cet effet, il a déjà été proposé dans le document EP-A-0.254.631 un dispositif de mise à l'air libre comportant un flotteur qui est destiné à solliciter vers le haut un pointeau lorsque le niveau de carburant atteint le dispositif, le pointeau venant alors obturer l'orifice de sortie de la vanne pour éviter toute fuite du carburant vers l'extérieur.

Cependant, il est apparu qu'un tel dispositif présentait certaines lacunes. En effet, lorsque le véhicule roule, le carburant est soumis à des ballottements de sorte que des projections peuvent atteindre le dispositif. Suivant les cas, il peut arriver que ces projections provoquent trop facilement la fermeture de l'orifice supérieur, ce qui peut empêcher une mise à l'air libre correcte du réservoir, ou au contraire que ces projections contournent le flotteur et atteignent l'orifice de sortie avant sa fermeture, au risque de se répandre vers l'extérieur.

L'invention a donc pour but de proposer un dispositif perfectionné qui permet d'éviter de tels inconvénients.

Dans ce but, l'invention propose un dispositif de mise à l'air libre pour un réservoir de carburant de véhicule automobile, du type comportant une chambre qui communique d'une part avec le réservoir et d'autre part, au travers d'un orifice supérieur de sortie, avec une canalisation d'évacuation, et du type dans lequel le dispositif comporte, à l'intérieur de la chambre, un flotteur qui commande un pointeau pour obturer l'orifice supérieur de sortie lorsque le niveau de carburant dépasse un seuil prédéterminé dans la chambre, caractérisé en ce que le dispositif comporte, entre le réservoir et le flotteur, des moyens pour limiter la vitesse de déplacement du carburant avant qu'il ne vienne au contact du flotteur.

Selon d'autres caractéristiques de l'invention :
- les moyens pour limiter la vitesse de déplacement du carburant comportent un élément filtrant ;
- les moyens pour limiter la vitesse de déplacement du carburant comportent une plaque ajourée ;
- les moyens pour limiter la vitesse de déplacement du carburant comportent des chicanes ;
- la chambre est délimitée vers le bas par une paroi transversale inférieure qui est munie d'un orifice inférieur de communication avec le réservoir, et les moyens pour limiter la vitesse de déplacement du carburant sont agencés en dessous de la paroi transversale inférieure, entre le réservoir et ladite paroi ;
- la paroi transversale inférieure de la chambre est réalisée sous la forme d'une pièce rapportée sur un boîtier du dispositif, et la pièce rapportée comporte des moyens de fixation des moyens pour ralentir la vitesse de déplacement du carburant ;
- la pièce rapportée comporte une jupe cylindrique qui s'étend axialement vers le bas depuis un bord périphérique de la paroi transversale inférieure et qui délimite un logement ouvert vers le bas dans lequel sont reçus les moyens pour ralentir la vitesse de déplacement du carburant ;
- les moyens pour ralentir la vitesse de déplacement du carburant sont retenus dans le logement par sertissage d'un bord inférieur de la jupe qui est rabattu transversalement en direction de l'axe de la jupe.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un dispositif conforme aux enseignements de l'invention lorsque le véhicule est à l'arrêt en position normale ;
- la figure 2 est une vue du dispositif de la figure 1 lorsque le véhicule est en cours de roulage ;
- la figure 3 est une vue similaire à celle de la figure 1 illustrant le dispositif lorsque le niveau de carburant à proximité du dispositif augmente, par exemple sous l'effet d'une forte accélération du véhicule ; et
- la figure 4 est une vue similaire à celle de la figure 1 illustrant le dispositif en cas de retournement du véhicule.

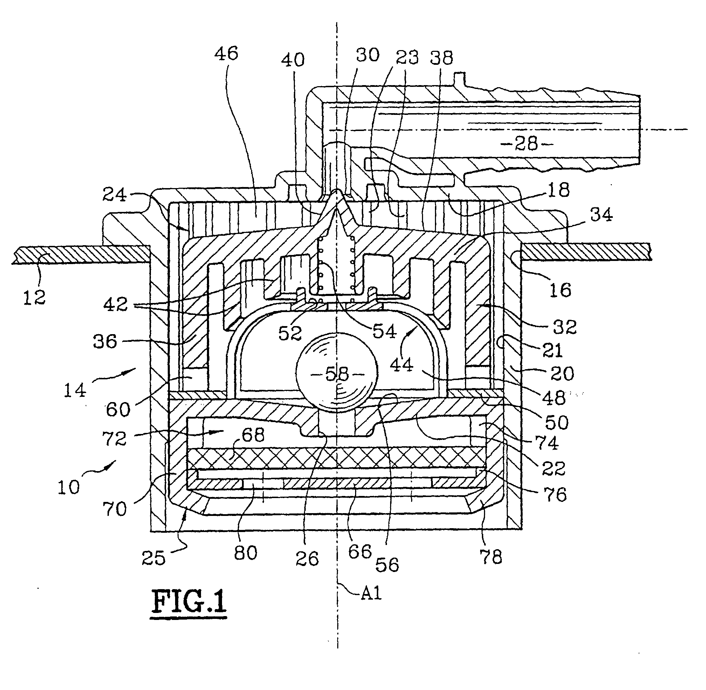

On a représenté sur la figure 1 un dispositif 10 pour la mise à l'air libre d'un réservoir de carburant de véhicule automobile dont on a représenté une paroi supérieure 12 qui, lorsque le véhicule est en position normale sur un sol horizontal, est sensiblement horizontale.

Le dispositif 10 comporte un boîtier 14 qui s'étend en partie à l'extérieur du réservoir et en partie à l'intérieur de celui-ci, le boîtier 14 s'étendant donc au travers d'une ouverture 16 aménagée dans la paroi supérieure 12 du réservoir. Le dispositif 10 est ainsi agencé au niveau d'un point haut du réservoir.

Le boîtier 14 comporte essentiellement une paroi transversale supérieure 18 depuis laquelle s'étend vers le bas, selon un axe A1 perpendiculaire à la paroi 12 du réservoir, une paroi latérale cylindrique 20 qui s'étend au travers de l'orifice 16 vers l'intérieur du réservoir.

Le boîtier 14 comporte encore une paroi transversale inférieure 22 qui est ici réalisée sous la forme d'une pièce rapportée 25 par rapport aux parois transversales supérieure 18 et latérale 20 qui sont réalisées d'une seule pièce par moulage. Le boîtier 14 délimite donc, entre les parois transversales supérieure 18 et inférieure 22, une chambre 24 qui est susceptible de communiquer d'une part avec l'intérieur du réservoir, au travers d'un orifice inférieur 26 aménagé au centre de la paroi transversale inférieure 22, et d'autre part avec une canalisation de mise à l'air libre 28 par l'intermédiaire d'un orifice supérieur 30 aménagé dans la paroi transversale supérieure 18.

Dans l'exemple de réalisation illustré sur la figure, la canalisation 28 est réalisée sous la forme d'un embout qui s'étend selon une direction générale perpendiculaire à l'axe A1, au-dessus du boîtier 14, et sur lequel est destinée à être branchée par exemple une conduite souple (non représentée). La conduite souple débouche elle-même par exemple dans une cartouche comportant des substances actives capables de fixer les vapeurs de carburant.

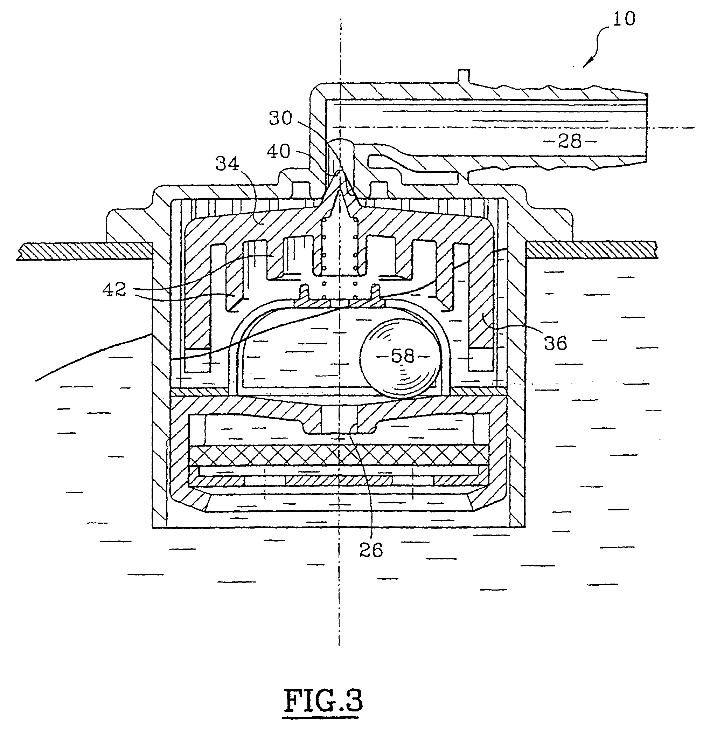

Le dispositif 10 comporte un premier élément mobile 32 qui est monté coulissant dans la chambre 24 selon la direction de l'axe A1, entre une position d'ouverture représentée à la figure 1 et une position de fermeture illustrée par exemple à la figure 3.

Selon un aspect de l'invention, ce premier élément mobile est réalisé sous la forme d'un flotteur. Le flotteur 32 comporte essentiellement une paroi transversale supérieure 34 depuis un bord extérieur duquel s'étend axialement vers le bas une jupe tubulaire externe 36. Le flotteur 32 est donc essentiellement un corps tubulaire d'axe sensiblement vertical qui est ouvert à son extrémité inférieure et fermé à son extrémité supérieure.

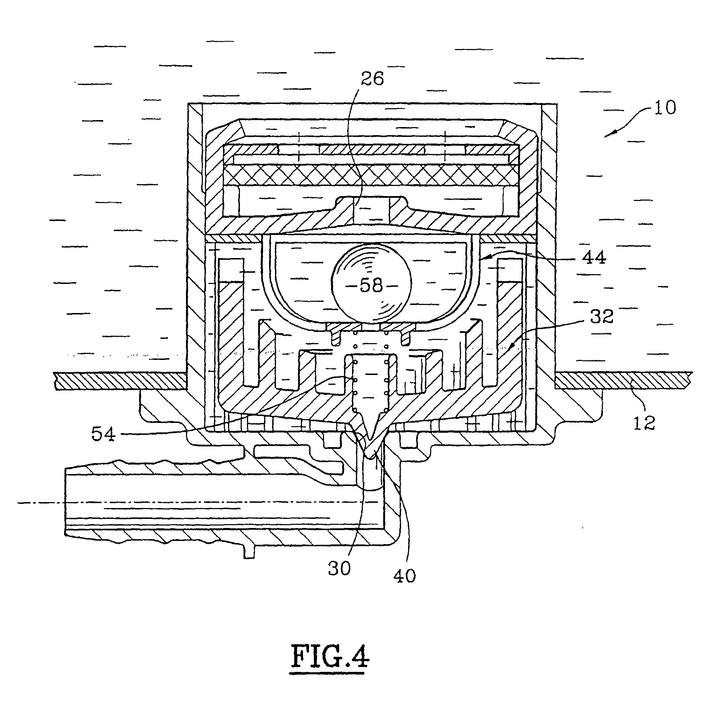

La face supérieure 38 de la cloison supérieure 34 porte un pointeau 40 qui est sensiblement conique d'axe A1 et qui est effilé vers le haut. Le pointeau 40 est destiné à obturer l'orifice supérieur 30 lorsque le flotteur 32 est dans sa position de fermeture illustré aux figures 3 et 4, c'est-à-dire lorsque le flotteur 32 est rapproché de la cloison transversale supérieure 18 du boîtier 14.

Par ailleurs, le flotteur 32 comporte deux collerettes 42 cylindriques tubulaires d'axe A1 qui s'étendent vers le bas depuis la face inférieure de la cloison transversale supérieure 34 mais dont la longueur selon l'axe A1 est inférieure à celle de la jupe externe 36. Les diamètres des deux collerettes 42 sont différents et ils sont tous deux inférieurs au diamètre de la jupe externe 36.

A l'intérieur de la chambre 24, on trouve une cage ajourée 44 qui délimite deux parties supérieures 46 et inférieure 48 de la chambre 24. La cage 44 comporte une collerette radiale externe annulaire 50 qui est en appui sur la paroi transversale inférieure 22. Par rapport à cette collerette 50, la cage 44 présente une partie en forme de cloche qui s'étend vers le haut depuis le bord radial interne de la collerette annulaire 50. La face supérieure de la partie en forme de cloche forme une surface de portée 52 contre laquelle s'appuie l'extrémité inférieure d'un ressort hélicoïdal de compression 54 dont l'extrémité supérieure coopère avec la face inférieure de la cloison transversale 34 du flotteur 32.

Le tarage du ressort 54 est tel que la force qu'il exerce sur le flotteur 32 est inférieure au poids du flotteur 32, de sorte que celui-ci, dans un état de repos, occupe sa position d'ouverture illustrée à la figure 1 lorsque le véhicule est au repos en position normale. Le ressort 54 est guidé en partie dans un logement cylindrique formé dans la face inférieure de la cloison transversale 34.

La paroi latérale 20 du boîtier 14 porte, sur une face cylindrique interne 21, des nervures 23 orientées axialement et réparties angulairement à intervalles réguliers. Ces nervures 23 assurent un guidage précis en coulissement du flotteur 32 qui s'appuie contre elles par la surface cylindrique externe de la jupe 36. Les nervures 23 permettent en outre de ménager entre le flotteur 32 et la paroi latérale 20 un espace radial qui permet la circulation des gaz entre l'orifice inférieur 26 et l'orifice supérieur 30 de la chambre 24. Bien entendu, par simple inversion mécanique, on peut prévoir que les nervures 23 soient portées par la face externe de la jupe 36 du flotteur 32.

La face supérieure de la paroi transversale inférieure 22 présente une partie centrale 56 qui est tronconique d'axe A1, évasée vers le haut et de demi-angle au sommet inférieur à 90°. La partie centrale tronconique 56 de la face supérieure de la paroi transversale 22 est sensiblement de même diamètre que la partie en forme de cloche de la cage 44 et l'orifice 26 débouche au centre de cette partie tronconique 56.

Une bille 58, dont le diamètre est par exemple au moins trois fois supérieur à celui de l'orifice inférieur 26, est reçue dans la partie inférieure 48 de la chambre 24 entre la partie tronconique 56 de la paroi transversale inférieure 22 et la partie en forme de cloche de la cage 44. Lorsque le véhicule est en position normale, la bille 58 est, par gravité, au contact de la surface tronconique 56 et, lorsque le véhicule est au repos, la bille 58 vient obturer l'orifice inférieur 26.

Conformément aux enseignement de l'invention, le dispositif 10 comporte des moyens qui permettent de ralentir le carburant avant que celui-ci ne pénètre dans la chambre 24.

A cet effet, le dispositif comporte une plaque de répartition 66 et un élément de diffusion 68 qui sont agencés dans le boîtier 14, en dessous de la paroi transversale inférieure 22 de la chambre et de l'orifice inférieur 26.

La plaque de répartition 66 et l'élément de diffusion 68 se présentent tous deux ' sous la forme d'une plaque agencée transversalement par rapport à l'axe A1 du dispositif 10 et ils sont maintenus par la pièce rapportée 25 dans laquelle est aménagée la paroi transversale inférieure 22. La pièce rapportée 25 comporte en effet une jupe cylindrique 70 qui s'étend axialement vers le bas depuis un bord périphérique externe de la paroi 22 pour délimiter un logement 72, ouvert vers le bas, dans lequel sont reçus la plaque de répartition 66 et l'élément de diffusion 68.

Comme on peut le voir sur les figures, l'élément de diffusion 68 est en appui axialement vers le haut contre des butées 74 qui sont réalisées venues de matière avec la pièce rapportée 25 et qui permettent d'éviter que l'élément de diffusion 68 ne viennent au contact de la paroi 22 au niveau de l'orifice inférieur 26.

La plaque de répartition 66, qui est agencée en dessous de l'élément de diffusion 68, est en appui axialement vers le haut, par une collerette périphérique 76 qui s'étend axialement vers le haut, contre le bord périphérique de l'élément 68. La plaque 66 est retenue axialement vers le bas par le bord inférieur 78 de la jupe 70 de la pièce rapportée 25 qui est rabattu radialement vers l'intérieur, par exemple par sertissage à chaud.

Dans l'exemple de réalisation illustré sur les figures, la plaque de répartition 66 est réalisée sous la forme d'une plaque ajourée en matériau plastique qui est pourvue, à sa périphérie, d'une série de perçages 80 répartis angulairement autour de l'axe A1. Cette disposition est particulièrement avantageuse car les perçages 80 ne sont alors pas en regard avec l'orifice inférieur 26. Toutefois, la plaque de répartition 66 pourrait aussi être réalisée par exemple sous la forme d'une grille.

L'élément de diffusion 68 est réalisé à l'aide d'un matériau poreux, par exemple un matériau présentant une structure tridimensionnelle maillée à cellules ouvertes. Il se comporte ainsi à la manière d'un élément filtrant.

La plaque 66 et l'élément 68 forment donc des freins au passage du carburant depuis le réservoir en direction de la chambre 24 de la valve. Dans le même but, il est possible d'utiliser un système à chicanes.

En variante, on pourra avantageusement utiliser une structure au travers de laquelle l'écoulement du carburant est plus freiné dans le sens du réservoir vers la chambre 24 que dans le sens de la chambre vers le réservoir. Ainsi, la plaque de répartition 66 pourrait comporter, au niveau de certain de ses perçages 80, des systèmes anti-retour composés de volets articulés ou d'une membrane souple, les systèmes anti-retour étant prévus pour se fermer lorsque le carburant circule du réservoir vers la chambre 24. En limitant ainsi le nombre de perçages effectivement ouverts, on limite le débit possible au travers de la plaque 66 dans l'un des sens de circulation du carburant.

On va maintenant décrire plus particulièrement le fonctionnement du dispositif selon l'invention.

Lorsque le véhicule est à l'arrêt sur une surface sensiblement horizontale, la bille 58 obture l'orifice 26 de sorte qu'il n'y a aucune communication entre l'intérieur du réservoir et le circuit de mise à l'air libre auquel est reliée la canalisation 28.

Lorsque la bille 58 obture ainsi l'orifice inférieur 26, elle participe aussi à une action d'interdiction de suremplissage du réservoir.

En effet, un tel réservoir est généralement rempli à l'aide d'un pistolet qui est engagé dans l'extrémité supérieure d'une tubulure de remplissage (non représentée) dont l'extrémité inférieure débouche dans le réservoir.

Au fur et à mesure du remplissage du réservoir avec le carburant liquide, il est nécessaire d'évacuer les vapeurs contenues initialement à l'intérieur du réservoir. Pour cela, on prévoit généralement une conduite d'évacuation (non représentée) dont une extrémité inférieure débouche au niveau d'un point haut du réservoir, au travers de la paroi supérieure 12 de celui-ci, et dont l'extrémité supérieure débouche généralement dans la partie supérieure de la tubulure de remplissage. Plus particulièrement, l'extrémité inférieure de la conduite d'évacuation débouche dans le réservoir à un niveau qui, verticalement, est en dessous du niveau de l'orifice inférieur 26 du dispositif 10. De la sorte, lorsque le niveau de carburant dans le réservoir atteint l'extrémité inférieure de la conduite d'évacuation, les vapeurs ne peuvent plus s'échapper par cette conduite. La bille 58 refermant l'orifice 26, elles ne peuvent pas non plus s'échapper par le dispositif de mise à l'air libre 10. Les vapeurs contenues dans le réservoir ne peuvent donc continuer de s'échapper que directement à travers la tubulure de remplissage, ce qui provoque un bouillonnement du carburant forçant l'utilisateur à interrompre la distribution du carburant par le pistolet.

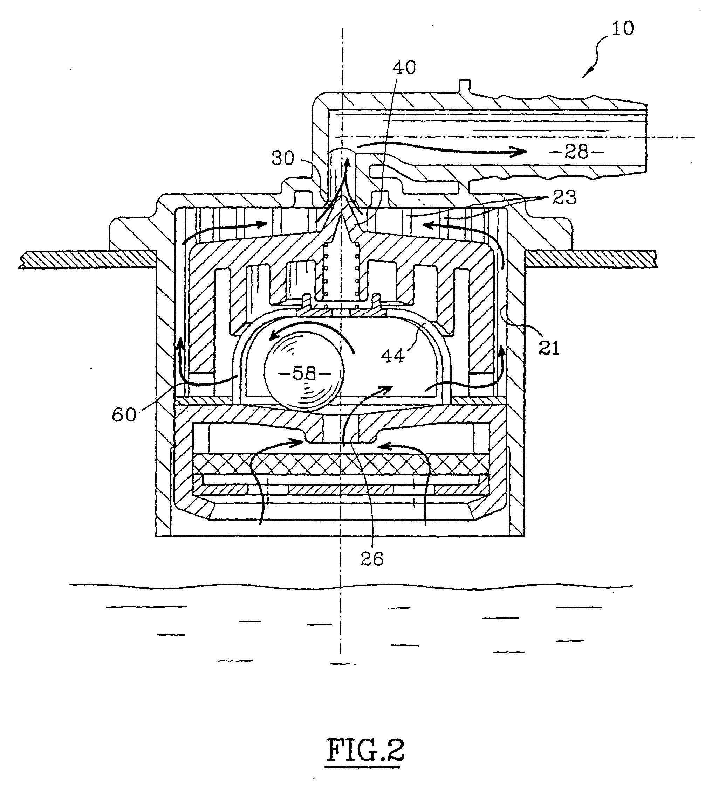

Lorsque, comme cela est illustré à la figure 2, il se produit une surpression à l'intérieur du réservoir, par exemple due à un réchauffement des gaz contenus dans celui-ci, la surpression à l'intérieur du réservoir peut provoquer le soulèvement de la bille 28 qui roule alors sur la surface supérieure tronconique de la paroi transversale inférieure 22.

Une telle situation se produit aussi lorsque le véhicule roule, du simple fait des vibrations qui sont inévitablement transmises au réservoir et au dispositif 10. Dans les deux cas, le flotteur 32 reste en appui par le bord inférieur de sa jùpe externe 36 contre la collerette 50 de la cage 44, elle-même en appui contre la paroi transversale inférieure 22.

Cependant, l'extrémité inférieure de la jupe 36 est munie d'entailles 60 de telle sorte que des gaz peuvent librement circuler à travers le dispositif 10 entre l'intérieur du réservoir et la canalisation de mise à l'air libre 28. Ainsi, les gaz circulent successivement au travers de l'orifice inférieur 26, au travers de la cage ajourée 44, au travers des entailles 60, entre la jupe externe 36 du flotteur 32 et la paroi latérale 20 du boîtier 14, et enfin au travers de l'orifice supérieur 30 vers la canalisation 28.

Ainsi, si le décollement de la bille 58 a été provoqué par une surpression à l'intérieur du réservoir, lorsque le véhicule est à l'arrêt, il y a possibilité d'évacuer l'excédent des gaz vers le circuit de mise à l'air libre.

Lorsque la bille 28 a été décollée du fait des vibrations qui apparaissent lors du roulage du véhicule, la mise à l'air libre du réservoir permet de maintenir une pression sensiblement constante et égale à la pression atmosphérique à l'intérieur de celui-ci, ceci en dépit des possibilités de variations de température de ces gaz et en dépit du fait que le niveau de carburant dans le réservoir est amené à diminuer au fil du roulage du véhicule augmentant ainsi l'espace dévolu au gaz.

On a illustré sur la figure 3 le cas où le niveau de carburant dans le réservoir, à proximité du dispositif de mise à l'air libre 10, devient supérieur au niveau de la paroi transversale inférieure 22 du boîtier 14. Un tel cas peut survenir par exemple lorsque le véhicule repose sur une surface présentant une forte déclivité ou lorsque le véhicule subit une accélération ou une décélération importante.

Comme on peut le voir, la bille 58 est alors chassée de sa position de repos dans laquelle elle obture l'orifice inférieur 26 de sorte que le carburant peut pénétrer à l'intérieur de la chambre 24. La cage 44 étant ajourée, le carburant peut même pénétrer dans la partie supérieure de la chambre 24. Toutefois, dès que le niveau de carburant dépasse les entailles 60 aménagées dans la jupe externe 36 du flotteur 32, le carburant enferme à l'intérieur du flotteur 32 un volume de gaz qui est compris entre la surface de carburant, la jupe 36 et la cloison transversale supérieure 34, de telle sorte que le flotteur 32 est poussé vers le haut et que le pointeau 40 vient obturer l'orifice 30 prévenant ainsi tout risque d'échappement du carburant au travers de cet orifice 30 en direction de la canalisation de mise à l'air libre 28.

La présence des collerettes annulaires 22 permet, en compartimentant le volume d'air emprisonné à l'intérieur du flotteur 32, de diminuer le temps nécessaire au flotteur 32 pour atteindre sa position de fermeture.

Conformément aux enseignements de l'invention, le niveau de carburant dans la chambre 24 ne peut pas s'élever brusquement du seul fait des projections dues aux ballottements du carburant dans le réservoir. En effet, la plaque de répartition 66 et l'élément de diffusion 68 permettent de ralentir le carburant avant son entrée dans la chambre 24, ce qui évite des fermetures intempestives de la valve.

Dans le mode de fonctionnement du dispositif qui est illustré à la figure 4, le véhicule est retourné. Alors, sous l'effet de son seul poids, le flotteur 32 se déplace vers sa position de fermeture pour empêcher que le carburant ne se répande à l'extérieur du réservoir. Le ressort 54 permet de réaliser cette obturation même si le véhicule n'est pas entièrement retourné, par exemple s'il est couché sur un flanc.

On notera par ailleurs que la bille 58 est alors retenue par la cage 44 et qu'elle n'est donc jamais au contact du flotteur 32.

En variante (non représentée), le dispositif de mise à l'air libre 10 peut par ailleurs comporter un clapet de sécurité intégré qui permet de réguler la pression à l'intérieur du réservoir si jamais la canalisation 28 ou le circuit de mise à l'air libre venaient à être bouchés.

## Revendications

1. Dispositif de mise à l'air libre pour un réservoir de carburant de véhicule automobile, du type comportant une chambre (24) qui communique d'une part avec le réservoir et d'autre part, au travers d'un orifice supérieur de sortie (30), avec une canalisation d'évacuation (28), et du type dans lequel le dispositif comporte, à l'intérieur de la chambre (24), un flotteur (32) qui commandé un pointeau (40) pour obturer l'orifice supérieur de sortie (30) lorsque le niveau de carburant dépasse un seuil prédéterminé dans la chambre (24), **caractérisé en ce que** le dispositif comporte, entre le réservoir et le flotteur (32), en dessous de ce flotteur, des moyens (22, 26, 66, 68, 80) pour limiter la vitesse de déplacement du carburant avánt qu'il ne vienne au contact du flotteur (32), ces moyens comportant des orifices décalés (26, 80) dans le sens de déplacement du carburant adaptés à former des chicanes.

2. Dispositif de mise à l'air libre selon la revendication 1, **caractérisé en ce que** les moyens pour limiter la vitesse de déplacement du carburant comportent deux plaques ajourées superposées (66, 22) percées d'orifices décalés (26, 80) formant les chicanes.

3. Dispositif de mise à l'air libre selon l'une quelconque des revendications précédentes, **caractérisé en ce que** les moyens pour limiter la vitesse de déplacement du carburant comportent un élément filtrant (68).

4. Dispositif de mise à l'air libre selon l'une quelconque des revendications précédentes, **caractérisé en ce que** la chambre (24), le flotteur (32) et les moyens pour limiter la vitesse de déplacement du carburant sont agencés suivant un axe central de symétrie commun (A1).

5. Dispositif de mise à l'air libre selon l'une quelconque des revendications précédentes, **caractérisé en ce que** la chambre (24) est délimitée vers le bas par une paroi transversale inférieure (22) qui est munie d'un orifice inférieur (26) de communication avec le réservoir, et **en ce que** des moyens complémentaires pour limiter la vitesse de déplacement du carburant sont agencés en dessous de la paroi transversale inférieure (22), entre le réservoir et ladite paroi (22).

6. Dispositif de mise à l'air libre selon la revendication 5, **caractérisé en ce que** la paroi transversale inférieure (22) de la chambre (24) est réalisée sous la forme d'une pièce rapportée (25) sur un boîtier (14) du dispositif, et **en ce que** la pièce rapportée (25) comporte des moyens de fixation (74, 78) des moyens complémentaires (66, 68) pour ralentir la vitesse de déplacement du carburant.

7. Dispositif de mise à l'air libre selon la revendication 6, **caractérisé en ce que** la pièce rapportée (25) comporte une jupe cylindrique (70) qui s'étend axialement vers le bas depuis un bord périphérique de la paroi transversale inférieure (22) et qui délimite un logement (72) ouvert vers le bas dans lequel sont reçus les moyens complémentaires (66, 68) pour ralentir la vitesse de déplacement du carburant.

8. Dispositif de mise à l'air libre selon la revendication 7, **caractérisé en ce que** les moyens complémentaires (66, 68) pour ralentir la vitesse de déplacement du carburant sont retenus dans le logement (72) par sertissage d'un bord inférieur (78) de la jupe (70) qui est rabattu transversalement en direction de l'axe (A1) de la jupe (70).

9. Dispositif de misé à l'air libre selon l'une des revendications 5 à 8, **caractérisé en ce que** la paroi transversale inférieure (22) possède une face supérieure qui, au moins dans une partie centrale (56) entourant l'orifice inférieur (26), est concave et qui supporte une bille (58) d'obturation de cet orifice.

## Patentansprüche

1. Entlüftungsvorrichtung für einen Kraftstofftank eines Kraftfahrzeugs jener Art, die eine einerseits mit dem Behälter und andererseits durch eine obere Ausgangsöffnung (30) mit einer Abführleitung (28) in Verbindung stehende Kammer (24) enthält, und jener Art, bei der die Vorrichtung im Inneren der Kammer (24) einen Schwimmer (32) enthält, der eine Schwimmernadel (40) steuert, um die obere Ausgangsöffnung (30) zu verschließen, wenn der Kraftstoffstand eine vorbestimmte Schwelle in der Kammer (24) übersteigt, **dadurch gekennzeichnet, dass** die Vorrichtung zwischen dem Behälter und dem Schwimmer (32) unter diesem Schwimmer Mittel (22, 26, 66, 68, 80) zur Begrenzung der Bewegungsgeschwindigkeit des Kraftstoffes, bevor er mit dem Schwimmer (32) in Kontakt kommt, umfasst, wobei diese Mittel in Bewegungsrichtung des Kraftstoffes versetzte Öffnungen (26, 80) umfassen, die so ausgeführt sind, dass sie Prallflächen bilden.

2. Entlüftungsvorrichtung nach Anspruch 1, **dadurch gekennzeichnet, dass** die Mittel zur Begrenzung der Bewegungsgeschwindigkeit des Kraftstoffes zwei übereinander liegende, durchbrochene Platten (66, 22) umfassen, die mit den Prallflächen bildenden, versetzten Öffnungen (26, 80) versehen sind.

3. Entlüftungsvorrichtung nach einem der vorhergehenden Ansprüche, **dadurch gekennzeichnet, dass** die Mittel zur Begrenzung der Bewegungsgeschwindigkeit des Kraftstoffes ein Filterelement (68) umfassen.

4. Entlüftungsvorrichtung nach einem der vorhergehenden Ansprüche, **dadurch gekennzeichnet, dass** die Kammer (24), der Schwimmer (32) und die Mittel zur Begrenzung der Bewegungsgeschwindigkeit des Kraftstoffes entlang einer gemeinsamen, mittleren Symmetrieachse (A1) angeordnet sind.

5. Entlüftungsvorrichtung nach einem der vorhergehenden Ansprüche, **dadurch gekennzeichnet, dass** die Kammer (24) nach unten hin durch eine untere Querwand (22) begrenzt ist, die mit einer mit dem Behälter in Verbindung stehenden unteren Öffnung (26) versehen ist, und dass unter der unteren Querwand (22) zwischen dem Behälter und der Wand (22) zusätzliche Mittel zur Begrenzung der Bewegungsgeschwindigkeit des Kraftstoffes vorgesehen sind.

6. Entlüftungsvorrichtung nach Anspruch 5, **dadurch gekennzeichnet, dass** die untere Querwand (22) der Kammer (24) in Form eines an einem Gehäuse (14) der Vorrichtung angebrachten Teils (25) ausgebildet ist und dass das angebrachte Teil (25) Mittel (74, 78) zur Befestigung der zusätzlichen Mittel (66, 68) umfasst, um die Bewegungsgeschwindigkeit des Kraftstoffes zu verlangsamen.

7. Entlüftungsvorrichtung nach Anspruch 6, **dadurch gekennzeichnet, dass** das angebrachte Teil (25) eine zylindrische Schürze (70) umfasst, die sich von einem Umfangsrand der unteren Querwand (22) aus axial nach unten erstreckt und eine nach unten hin offene Aufnahme (72) begrenzt, in der die zusätzlichen Mittel (66, 68) zur Verlangsamung der Bewegungsgeschwindigkeit des Kraftstoffes aufgenommen sind.

8. Entlüftungsvorrichtung nach Anspruch 7, **dadurch gekennzeichnet, dass** die zusätzlichen Mittel (66, 68) zur Verlangsamung der Bewegungsgeschwindigkeit des Kraftstoffes durch Bördeln eines unteren Rands (78) der Schürze (70), der in Richtung der Achse (A1) der Schürze (70) in Querrichtung umgebogen ist, in der Aufnahme festgehalten werden.

9. Entlüftungsvorrichtung nach einem der Ansprüche 5 bis 8, **dadurch gekennzeichnet, dass** die untere Querwand (22) eine obere Fläche aufweist, die zumindest in einem mittleren Teil (56), der die untere Öffnung (26) umgibt, konkav ist und eine Verschlusskugel (58) dieser Öffnung stützt.

## Claims

1. Device for communication with the open air for a motor vehicle fuel tank, of the type including a chamber (24) which communicates on the one hand with the tank and on the other hand, through an upper outlet orifice (30), with an evacuation pipe (28), and of the type in which the device includes, inside the chamber (24), a float (32) which controls a needle (40) to close the upper outlet orifice (30) when the fuel level exceeds a predetermined threshold in the chamber (24), **characterised by** the fact that the device includes, between the tank and the float (32), below this float, means (22, 26, 66, 68, 80) to limit the rate of displacement of the fuel before it comes into contact with the float (32), these means including orifices (26, 80) offset in the direction of displacement of the fuel suitable to form baffles.

2. Device for communication with the open air as described in claim 1, **characterised by** the fact that the means for limiting the rate of displacement of the fuel include two superimposed perforated plates (66, 22), perforated by off-set orifices (26, 80) forming the baffles.

3. Device for communication with the open air as described in any one of the preceding claims, **characterised by** the fact that the means for limiting the rate of displacement of the fuel include a filter element (68).

4. Device for communication with the open air as described in any one of the preceding claims, **characterised by** the fact that the chamber (24), the float (32) and the means for limiting the rate of displacement of the fuel are arranged on a common axis of symmetry (A1).

5. Device for communication with the open air as described in any one of the preceding claims, **characterised by** the fact that the chamber (24) is downwardly defined by a lower transversal wall (22) which is provided with a lower orifice (26) for communication with the tank, and by the fact that complementary means to limit the rate of displacement of the fuel are arranged below the lower transversal wall (22), between the tank and the said wall (22).

6. Device for communication with the open air as described in claim 5, **characterised by** the fact that the lower transversal wall (22) of the chamber (24) is made in the form of a piece (25) added to a case (14) of the device, and by the fact that the added piece (25) includes means (74, 78) for fixing the complementary means (66, 68) to slow down the rate of displacement of the fuel.

7. Device for communication with the open air as described in claim 6, **characterised by** the fact that the added piece (25) includes a cylindrical skirt (70) which extends axially downwardly from a peripheral edge of the lower transversal wall (22) and which defines a downwardly open housing (72) in which the complementary means (66, 68) to slow down the rate of displacement of the fuel are received.

8. Device for communication with the open air as described in claim 7, **characterised by** the fact that the complementary means (66, 68) to slow down the rate of displacement of the fuel are retained in the housing (72) by crimping a lower edge (78) of the skirt (70) which is turned transversally towards the axis (A1) of the skirt (70).

9. Device for communication with the open air as described in one of claims 5 to 8, **characterised by** the fact that the lower transversal wall (22) has an upper face which at least in a central part (56) surrounding the lower orifice 26, is concave and which supports a ball (58) for closing this orifice.
